# EUROPÄISCHE PATENTSCHRIFT

(11) **EP 1 191 768 B1**
(45) Veröffentlichungstag und Bekanntmachung des Hinweises auf die Patenterteilung: **16.11.2005**
(21) Anmeldenummer: 01440271.3
(22) Anmeldetag: 20.08.2001
(51) Int. Cl.: H04M 1/02, G09G 3/00

(54) **Verfahren zur Darstellung von Abbildungen auf einem Bildschirm, Bildschirmeinheit und Telekommunikationsendgerät hierfür**
Method for displaying images on a screen , display device and telecommunication terminal therefor
Méthode de représentation d'images sur un écran , unité d'affichage et terminal de télécommunication associé

(30) Priorität: 22.09.2000 DE 10047055
(43) Veröffentlichungstag der Anmeldung: 27.03.2002
(73) Patentinhaber: ALCATEL, 75008 Paris (FR)
(72) Erfinder: Wilhelm, Michael, 71665 Vaihingen/Enz (DE)
(74) Vertreter: Rausch, Gabriele

(56) Entgegenhaltungen:
- DE-A- 19 501 155
- GB-A- 2 343 324
- US-A- 5 715 524
- PATENT ABSTRACTS OF JAPAN vol. 006, no. 237 (P-157), 25. November 1982 (1982-11-25) & JP 57 137879 A (HITACHI SEISAKUSHO KK), 25. August 1982 (1982-08-25)

## Beschreibung

Die Erfindung betrifft ein Verfahren nach dem Oberbegriff des Anspruchs 1, eine Bildschirmeinheit nach dem Oberbegriff des Anspruchs 10 und ein Telekommunikationsendgerät nach dem Oberbegriff des Anspruchs 16 hierfür.

Bei modernen, (Telekommunikations-)Endgeräten, insbesondere bei Endgeräten für den Mobilfunk, ist die visuelle Darstellung von empfangenen Informationen von wachsender Bedeutung. Zukünftige Mobilfunksysteme, z.B. Mobilfunksysteme nach dem sogenannten UMTS-Standard (Universal Mobile Telecommunications System) erlauben insbesondere die Übertragung von hochaufzulösenden Bildern in schneller Zeitfolge; dadurch wird es beispielsweise möglich, Videokonferenzen mit hoher Bildqualität durchzuführen. Entsprechende Endgeräte brauchen dazu einen hochauflösenden Bildschirm akzeptabler Größe, d.h. einer Größe, die einen möglichst großen Teil der Oberfläche des Endgeräts einnimmt.

Ein Problem bei der Ausführung der Bildschirme heutiger Endgeräte liegt darin, dass diese in der Regel so orientiert sind, dass das Endgerät immer in Längsrichtung vor die Augen des Benutzers gebracht werden muss, damit Text und Bilder lesbar oder interpretierbar sind. Da mobile Endgeräte in der Regel gegenüber Ihrer Länge eine weit geringere Breite aufweisen, wird ein Bildschirm für ein solches Endgerät so realisiert, dass er einen großen Teil der Höhe des Endgeräts einnimmt. Dadurch ergibt sich für den Benutzer ein (in Querrichtung) schmaler, (in Längsrichtung) hoher Bildsthirm. Während ein solcher Bildschirm z.B. für einspaltige Tabellen oder Bilder in Hochformat geeignet ist, ergeben sich Probleme z.B. bei der Darstellung mehrspaltiger Tabellen oder von Bildern in Querformat. Anders als bei einfachem Fließtext lassen sich solche Darstellungen nicht oder nur unvollkommen durch einen automatischen Umbruch an den Bildschirm anpassen. Da heutige und zukünftige mobile Endgeräte eine insgesamt geringe Baugröße aufweisen, lassen sich die Darstellungen auch nicht sinnvoll dadurch anpassen, dass sie entsprechend verkleinert werden. Eine Möglichkeit zur Lösung des Anpassungsproblems besteht darin, dass der Benutzer, z.B. durch sogenanntes scrollen, einen Ausschnitt zur Darstellung auf den Bildschirm auswählt. Dies ist jedoch mit erhöhtem Aufwand für den Benutzer verbunden und eignet sich insbesondere nicht für die Darstellung von Bildern.

Eine Lösung des beschriebenen Problems bietet die Patentschrift US 5566098 "Rotable Pen-based Computer with Automatically Reorienting Display". Dabei wird ein Verfahren vorgeschlagen, bei dem die Bildschirmorientierung in 90-Grad Winkelschritten verändert werden kann. Dazu muss allerdings jeweils eine Umwandlung der Ansteuerungssignale für den Bildschirm erfolgen. Dazu werden die Adressen jedes einzelnen Bildschirmelements, auch (Bildschirm-)Pixel genannt, zunächst umgerechnet. Anschließend wird auf Basis dieser Umrechnung ein neues Ansteuerungssignal erzeugt. Der Rechenaufwand für diese Umrechnung steigt mit der Anzahl der genannten Pixel. Da mobile Endgeräte mit immer größeren und höherauflösenden Bildschirmen ausgestattet werden, erhöht sich der Rechenaufwand entsprechend.

Ferner ist in der Patentschrift DE 195 01 155 A ein Verfahren zur Bildwiedergabe auf einem Flüssigkristallbildschirm mit mehreren LCD-Bildwiedergabeebenen beschrieben, welches zur Ausführung der hier beschriebenen Erfindung verwendet werden kann.

Der Erfindung liegt nun die Aufgabe zugrunde, ausgehend von der Patenschrift US 5566098 ein schnelles und einfaches Verfahren zur Umschaltung von Abbildungen, insbesondere zur Orientierungsänderung, und eine entsprechende Bildschirmeinheit zu schaffen.

Diese Aufgabe wird erfindungsgemäß gelöst durch Verfahren, eine Bildschirmeinheit und ein Telekommunikationsendgerät nach der Lehre der unabhängigen Ansprüche.

Der Grundgedanke der Erfindung ist der Einsatz von Bildschirmen mit mehreren, einzeln elektrisch ansteuerbaren Bildschirmebenen. Solche Bildschirme sind für ein Verfahren zur dreidimensionalen Darstellung bekannt, die aus mehreren Flüssigkeitskristall-Bildschirmfolien (engl.: Liquid Crystal Display, LCD) bestehen, die übereinander zu einer Einheit angeordnet sind. Diese Bildschirmfolien oder Bildschirmebenen sind transparent, so dass sich die Darstellungen der einzelnen Bildschirmebenen optisch überlagern und als ein Bild darstellen.

In einer ersten Ausführung wird ein aus zwei senkrecht zueinander angeordneten Bildschirmebenen bestehender Bildschirm beschrieben, wobei, je nach gewählter Orientierung, genau eine der beiden Bildschirmebenen aktiv geschaltet wird. Die Ansteuerungssignale sind dabei für beide Bildschirmebenen gleich oder zumindest ähnlich. Die Wahl der Orientierung kann dabei durch Eingabe des Benutzers z.B. durch Tastatureingabe, Spracheingabe oder auch Berühren sensitiver Bereiche eines Bildschirm erfolgen. Alternativ erfolgt Bestimmung der Orientierung dadurch, das ein Sensor, beispielsweise eine Anordnung von Beschleunigungsmessern und/oder Quecksilberschaltern, die Lage des Geräts bezüglich der Achse senkrecht zur Erde ermittelt. Anschließend wird automatisch eine Orientierung der Abbildungen gewählt, die für einen stehenden oder sitzenden Betrachter, d.h. senkrecht zur Erde orientierten Benutzer, optimal ist. In einer weiteren Alternative erfolgt die Wahl durch Interpretation bestimmter Bilddaten, z.B. Daten, die das Bildformat betreffen. So kann eine Abbildung so orientiert werden, dass sie optimal auf den Bildschirm passt. Vorteilhafterweise wird dem Benutzer die Möglichkeit gegeben, zwischen einem von verschiedenen verfügbaren Verfahren zu wählen, indem z.B. eine Rangfolge der Verfahren oder ein bevorzugtes Verfahren vorgewählt werden kann.

Um eine optimale Orientierung in 90-Grad-Schritten über 360 Grad zu ermöglichen, wird statt eines Bildschirms mit zwei Bildschirmebenen ein Bildschirm mit vier Bildschirmebenen realisiert.

Um eine automatische, näherungsweise kontinuierliche Orientierungsanpassung in einen bestimmten Winkelbereich zu ermöglichen, wird eine bestimmte Anzahl von Bildschirmebenen vorzugsweise in äquidistanten Winkelschritten orientiert in diesem Winkelbereich angeordnet. Mit Hilfe einer Anordnung von Beschleunigungsmessen wird dann jeweils die Bildschirmebene aktiviert, die der senkrechten Orientierung am nächsten kommt.

In einer weiteren Ausführung wird ein Bildschirm mit zwei oder mehreren Bildschirmebenen verwendet, die es erlauben, zwischen verschiedenen Abbildungen, beispielsweise mit gleicher Bildschirmorientierung zu wählen. Dabei können ein oder mehrere Bildschirmebenen gleichzeitig aktiv geschaltet werden. Jede Bildschirmebene kann mit gesonderten Ansteuerungssignalen angesteuert werden. So können beispielsweise Videosequenzen zweier unterschiedlicher Kommunikationsverbindungen gleichzeitig auf verschiedenen Bildschirmbereichen oder wechselweise dargestellt werden, ohne dass eine Verknüpfung der Bildschirmdaten der verschiedenen Videosequenzen erforderlich ist.

Weitere Ausgestaltungen der Erfindung sind den Unteransprüchen und der nachfolgenden Beschreibung zu entnehmen.

Im folgenden wird die Erfindung unter Zuhilfenahme der beiliegenden Zeichnungen weiter erläutert:
- Fig.1: zeigt ein vertikal orientiertes Telekommunikationsendgerät,
- Fig.2: zeigt ein horizontal orientiertes Telekommunikationsendgerät,
- Fig.3: zeigt einen Ausschnitt eines Blockschaltbilds eines erfindungsgemäßen Endgeröts für ein erstes erfindungsgemäßes Verfahren und
- Fig.4: zeigt beispielhaft einen Ausschnitt eines Blockschaltbilds eines erfindungsgemäßen Endgeräts für ein zweites erfindungsgemäßes Verfahren.

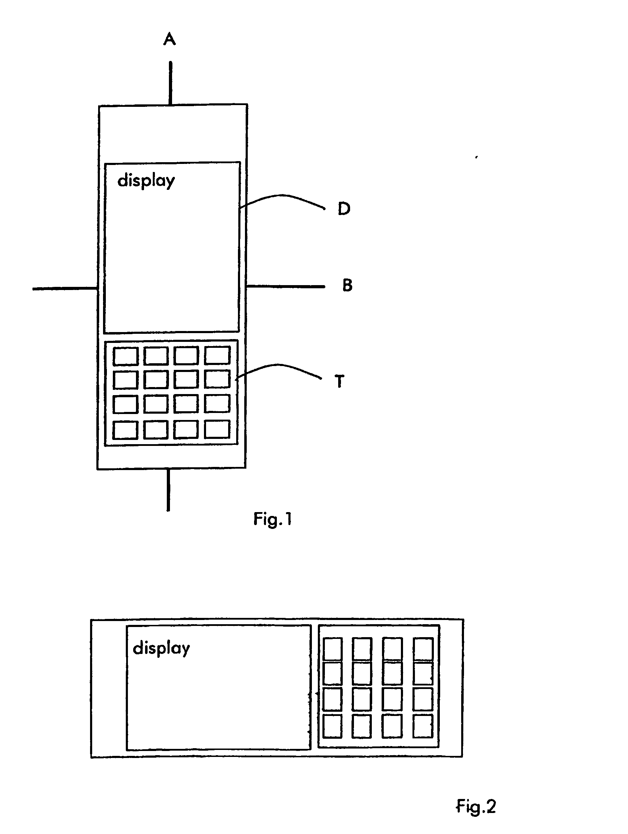

Fig.1 zeigt ein mobiles (Telekommunikations-)Endgerät mit einer Längsachse A und einer Querachse B, sowie einem Tastaturfeld T und einem Bildschirmfeld D. Das Endgerät ist hier vertikal nach oben orientiert dargestellt. Im folgenden wird das Endgerät als vertikal orientiert angesehen, wenn sich die Querachse B in einer horizontalen Ebene befindet. In Fig.2 ist das Endgerät horizontal orientiert dargestellt, d.h. die Längsachse A befindet sich in einer horizontalen Ebene. Falls sich beide Achsen A und B in einer horizontalen Ebene befinden, so ist eine Aussage, ob das Endgerät vertikal oder horizontal orientiert ist, nicht möglich. In diesem Fall steht eine Achse, die sowohl zur Längsachse A als auch zur Querachse B senkrecht steht, auch Normalenachse genannt, senkrecht zur (gedachten, glatten) Erdoberfläche. In Fig.1 und Fig.2 ist beispielhaft ein jeweils horizontal auf dem Bildschirmfeld D orientierter Schriftzug "display" dargestellt.

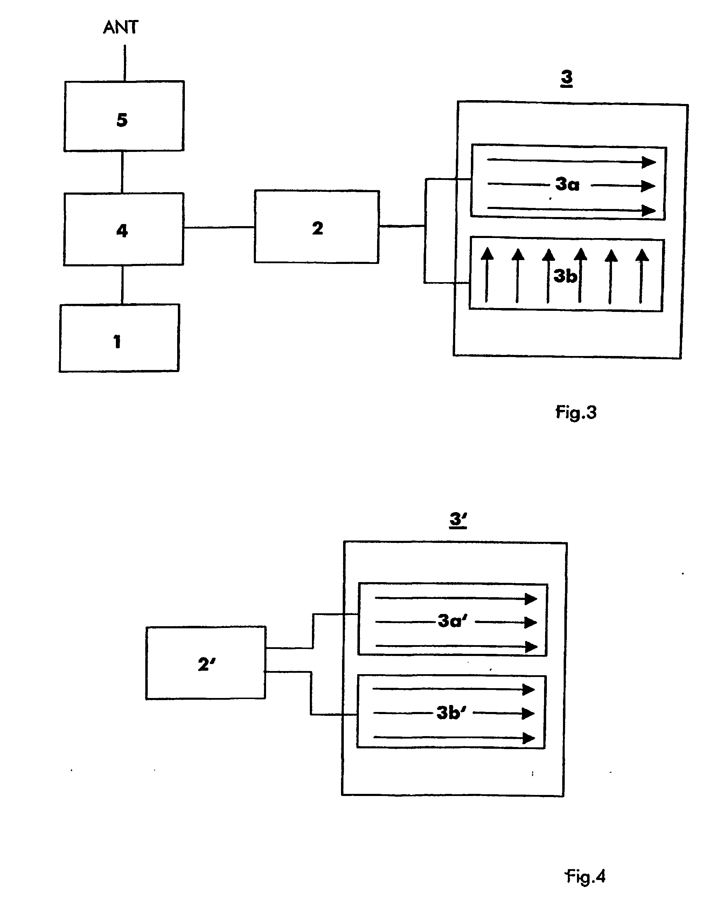

Fig.3 zeigt einen Ausschnitt eines Blockschaltbilds eines erfindungsgemäßen Endgeräts für ein erstes erfindungsgemäßes Verfahren mit einer Eingabeeinheit 1 (engl.: input unit), einer (Bildschirm-)Schnittstelleneinheit 2 (engl.: interface unit), einem Bildschirm 3 (engl.: display), einer Steuereinheit 4 (control unit) und einer Funkeinheit 5 (engl.: radio unit). Der Bildschirm 3 besteht aus einer zum Endgerät quer orientierten Bildschirmebene 3a und einer längs orientierten Bildschirmebene 3b. Die Steuereinheit 4 ist mit der Eingabeeinheit 1, der Schnittstelleneinheit 2 und der Funkeinheit 5 verbunden. Die Funkeinheit weist eine Antenne ANT auf. Die Schnittstelleneinheit 2 weist eine Verbindung zur quer orientierten Bildschirmebene 3a und zur längs orientierten Bildschirmebene 3b auf.

Die von der Funkeinheit 5 über die Antenne ANT empfangenen Daten werden der Steuereinheit 4 übergeben. Die Steuereinheit 4 ermittelt, welche Daten zur visuellen Darstellung auf dem Bildschirm 3 bestimmt sind. Die zur visuellen Darstellung bestimmten Daten werden der Schnittstelleneinheit 2 übergeben, welche aus diesen Daten Signale zur Ansteuerung des Bildschirms 3 erzeugt. Darüber hinaus kann die Steuereinheit 4 auch autonom Daten zur visuellen Darstellung erzeugen und diese Daten zur Anzeige auf dem Bildschirm 3 bringen, um beispielsweise den Benutzer zu einer bestimmten Eingabe in die Eingabeeinheit 1 aufzufordern. Die Eingabeeinheit 1 beinhaltet eine Tastatur, wobei die Tastatur Tasten zur Erzeugung fest definierter Symbole (z.B. Zahlen oder Buchstaben) aufweist. Weiter können Tasten vorgesehen werden, die eine Eingabe variabel definierter Befehle aufweisen, die während der Kommunikation des Benutzers mit dem Endgerät festgelegt werden und deren Bedeutung auf dem Bildschirm 3 aktuell angezeigt wird. Außerdem kann die Eingabeeinheit 1 Mittel zur Spracherkennung aufweisen, die es ermöglichen Sprachbefehle des Benutzers entgegenzunehmen. Weiter kann der Bildschirm 3 mit berührungssensitiven Flächen versehen sein, die eine besonders komfortable Eingabe variabel definierter Befehle ermöglichen.

Der Schnittstelleneinheit 2 wird über die Kontrolleinheit 4 mitgeteilt, welche Bildschirmebene 3a oder 3b aktiviert werden soll. Die Schnittstelleneinheit 2 aktiviert die gewünschte Bildschirmebene 3a oder 3b durch Bereitstellen einer entsprechenden Betriebsspannung für die gewünschte Bildschirmebene 3a oder 3b. Beiden Bildschirmebenen 3a und 3b wird hier permanent dasselbe Ansteuersignal zugeführt. Durch Umschaltung der Aktivierung, d.h. durch Aktivieren der Bildschirmebene 3b und gleichzeitigem Passivieren der Bildschirmebene 3a, wird dann das gleiche Bild oder jeweils Ausschnitte eines Bildes um 90 Grad gedreht angezeigt.

Ein LCD-Bildschirm zur flexiblen Darstellung von beliebigen Bildinhalten besteht aus einer bestimmten Anzahl von vorzugsweise quadratischen Pixeln genannt, die pro Zeile (quer) und pro Spalte (längs) äquidistant verteilt sind. Ein Pixel wird durch das Anlegen einer bestimmten Spannung an seine beiden (elektrischen) Anschlüsse angesteuert. Um die Anzahl der Anschlüsse eines Bildschirms insgesamt gering zu halten, ist jeweils ein Anschluss der Pixel pro Zeile und ein Anschluss der Pixel pro Spalte miteinander (elektrisch) verbunden. Für einen Bildschirm mit n Zeilen und m Spalten ergeben sich-also n Zeilenanschlüsse plus m Spaltenanschlüsse. Um dennoch jeden Pixel einzeln ansteuern zu können, wird der Bildschirm zeilenweise in schneller zeitlicher Folge angesteuert, wobei diese zeitliche Reihenfolge wegen der Trägheit des menschlichen Auges nicht wahrgenommen wird. Im folgenden wird davon ausgegangen, dass ein Pixel ohne angelegte Spannung transparent bleibt.

Es ist naheliegend, dass quadratische Bildschirmebenen 3a und 3b, d.h. Bildschirmebenen mit gleicher Pixelanzahl pro Reihe und Spalte, mit identischen Ansteuerungssignalen angesteuert werden. Bei Vorliegen eines nicht-quadratischen Bildschirms wird je nach Orientierung in jeder Bildschirmebene 3a oder 3b jeweils ein unterschiedlicher Ausschnitt eines Bildes dargestellt. Allerdings genügt auch hier die Erzeugung eines einzigen Ansteuerungssignals für einen virtuellen quadratischen Bildschirm, bei dem je nach Anschluss der Bildschirmebene 3a oder 3b bestimmte Anschlüsse der Schnittstelleneinheit 2 frei bleiben oder blind angeschlossen werden. Es ist allerdings prinzipiell auch möglich, verschiedene Bildschirmebenen 3a und 3b getrennt an eine Schnittstelleneinheit 2 anzuschließen und mit verschiedenen Ansteuerungssignale anzusteuern.

Die Wahl der Orientierung, d.h. die Wahl der zu aktivierenden Bildschirmebene 3a oder 3b erfolgt dabei durch Eingabe des Benutzers z.B. durch Tastatureingabe, Spracheingabe oder durch Berühren sensitiver Bereiche auf dem Bildschirm 3. Dabei wird zunächst eine Vorzugsorientierung eingegeben. Die Orientierung einer aktuell angezeigten Darstellung kann durch aktuelle Eingaben des Benutzers verändert werden. Die Steuereinheit 4 empfängt diese Eingaben, ermittelt die anzusteuernde Bildschirmebene 3a oder 3b und weist die Schnittstelleneinheit 2 an, die entsprechende Bildschirmeinheit 3a oder 3b zu aktivieren.

Die Wahl der Orientierung kann nach zwei unterschiedlichen Kriterien erfolgen. Das erste Kriterium stellt, bei bestimmter Lage des Endgerät, die optimale Ausrichtung der Abbildung in Bezug auf den Benutzer dar. Das zweite Kriterium stellt die optimale Ausnutzung des Bildschirms bei einem bestimmten vorliegenden Format der Abbildung dar. Im folgenden wird dazu jeweils ein automatisches Verfahren beschrieben:

In einem ersten automatischen Verfahren erfolgt die Bestimmung der Orientierung dadurch, das ein Sensor, beispielsweise eine Anordnung von Beschleunigungsmessern, die Lage des Geräts bezüglich der Achse senkrecht zur Erde ermittelt. Dabei wird ein erster Beschleunigungsmesser mit der sensitiven Achse in Richtung der Längsachse A (zum unteren Ende des Endgeräts) und ein weiterer Beschleunigungsmesser mit der sensitiven Achse in Richtung der Querachse B (zum linken Ende des Endgeräts) angebracht. Die Beschleunigungsmesser messen abhängig von der Orientierung des Endgeräts jeweils einen bestimmten Anteil der Erdbeschleunigung. Zur Wahl der Orientierung werden die von den Beschleunigungsmessern ermittelten Beschleunigungswerte bewertet. Dazu werden zunächst die Vorzeichen der Beschleunigungswerte betrachtet. Sind beide Beschleunigungswerte negativ, so kann keine optimale Bildschirmebene ausgewählt werden. In diesem Fall erfolgt keine Wahl der Orientierung durch die Sensorschaltung. Desgleichen erfolgt keine Wahl der Orientierung, wenn beide Beschleunigungswerte verschwinden, d.h. wenn die oben erwähnte Normalenachse senkrecht steht. Ist nur der Beschleunigungswert in Richtung der Querachse oder nur der Beschleunigungswert in Richtung der Längsachse negativ, so wird die quer orientierte Bildschirmebene 3a bzw. die längs orientierte Bildschirmebene 3b aktiviert. Sind beide Beschleunigungswerte positiv, so erfolgt ein Vergleich dieser Werte: Überwiegt dabei der Beschleunigungswert in Richtung der Längsachse, so wird die quer orientierte Bildschirmebene 3a aktiviert; überwiegt der Beschleunigungswert in Richtung der Querachse, so wird die längsorientierte Bildschirmebene 3b aktiviert. Damit kurzfristige Einwirkungen von Beschleunigungen, beispielsweise durch Erschütterungen des Endgeräts, ohne Einfluss bleiben, werden die von den Beschleunigungsmessern gemessenen Beschleunigungswerte vor der oben beschriebenen Bewertung tiefpassgefiltert. Außerdem wird zur Vermeidung häufigen Umschaltens bei kritischen Orientierungen (z.8. bei 45-Grad-Orientierung) eine Hystereseschaltung vorgesehen, die die Aktivierung einer Bildschirmebene 3a oder 3b nach Umschalten der Aktivierung mindestens solange beibehält, bis das Endgerät erneut eine signifikante Orientierungsänderung erfährt.

In einem zweiten automatischen Verfahren erfolgt die Bestimmung der Orientierung durch Identifizierung bestimmter Bilddaten, z.B. Daten, die das Bildformat betreffen oder bestimmter Schlüsselwörter. So kann beispielsweise eine Abbildung so orientiert werden, dass sie optimal auf den Bildschirm passt.

Vorteilhafterweise wird dem Benutzer die Möglichkeit gegeben, ein oder mehrere Verfahren zu aktivieren und gegebenenfalls eine Rangfolge aktivierter Verfahren zu bestimmen. So kann ein Benutzer beispielsweise festlegen, das die Aktivierung vorrangig durch Identifizierung von Bilddaten erfolgt. Falls keine relevanten Bilddaten identifiziert werden können, soll dann die Wahl der Orientierung aufgrund einer Sensormessung erfolgen. Führt auch die Sensormessung zu keiner Wahl, so soll eine vordefinierte Orientierung gewählt werden.

Damit eine Orientierung in 4 jeweils 90 Grad zueinander versetzten Richtungen möglich ist, wird ein Bildschirm mit vier Bildschirmebenen realisiert.

Um eine automatische, näherungsweise kontinuierliche Orientierungsanpassung in einen bestimmten Winkelbereich zu ermöglichen, wird eine bestimmte Anzahl von Bildschirmebenen vorzugsweise in äquidistanten Winkelschritten in diesem Winkelbereich orientiert angeordnet. So kann beispielsweise mit 24 Bildschirmebenen für den gesamte Winkelbereich von 360 Grad eine Orientierungsanpassung mit Winkelschritten von 15 Grad erfolgen. Die Normalenachse des Endgeräts bildet mit der Erdoberfläche einen bestimmten Winkel β. Weiter ist das Endgerät mit einen Winkel α um die Normalenachse aus der senkrechten Lage gedreht. Mit Hilfe einer Anordnung von zwei Beschleunigungsmessern, z.B. wie oben beschrieben mit ihren sensitiven Achsen in Richtung der Längsachse A und bzw. in Richtung der Querachse B kann der Winkel α ermittelt werden. Aufgrund dieses Winkels α kann die Bildschirmebene aktiviert werden, die einer senkrechten Orientierung am nächsten kommt.

Fig.4 zeigt beispielhaft einen Ausschnitt eines Blockschaltbilds eines erfindungsgemäßen Endgeräts für ein zweites erfindungsgemäßes Verfahren mit einer gegenüber Fig.3 modifizierten Schnittstelleneinheit 2' und einem modifizierten Bildschirm 3'. Der modifizierte Bildschirm 3' besteht aus einer ersten (quer orientierten) Bildschirmebene 3a' und einer zweiten (quer orientierten) Bildschirmebene 3b'. Die modifizierte Schnittstelleneinheit 2' weist jeweils eine Verbindung zur ersten Bildschirmebene 3a' und zur zweiten Bildschirmebene 3b' auf.

Die von den modifizierten Schnittstelleneinheit 2' and die Bildschirmebenen 3a' und 3b' übermittelten Ansteuersignale können hier grundsätzlich unterschiedlich sein. Anders als bei der ersten Variante unter Fig.3 ist hier die Möglichkeit vorgesehen, beide Bildschirmebenen 3a' und 3b' gleichzeitig aktiv zu schalten. Wegen der Transparenz mindestens der obersten Bildschirmebene überlagern sich Abbildungen der Bildschirmebenen 3a' und 3b'. Dabei kann die Bildschirmfläche zwischen beiden Bildschirmebenen in zwei oder mehrere Teilflächen, im einfachsten Fall in zwei rechteckige Teilflächen, aufgeteilt werden, d.h. je einer Bildschirmebene 3a' oder 3b' werden dann bestimmte Flachen zur Darstellung zugeteilt. Die Bildschirmebenen 3a' und 3b' können aus unterschiedlichen Quellen gespeist werden. Außerdem können die verschiedenen Darstellungen auch unabhängig voneinander durch den Benutzer bearbeitet werden. Es erfolgt keine logische Verknüpfung der Bildschirmdaten für verschiedene Bildschirmebenen 3a' und 3b'beispielsweise in einer Steuereinheit 4. Dadurch lassen sich gegenüber einer Bildschirmeinheit nach dem Stand der Technik mit einer einzigen Bildschirmebene Kapazitäten für die Berechnung der logischen Verknüpfungen einsparen und es lässt sich ein schnellerer Bildoufbou erzielen. Dies ist besonders vorteilhaft bei Videoanwendungen, d.h. der Darstellung von Videosequenzen, in einer oder beiden Bildschirmebenen 3a' und oder 3b'. Eine Aufteilung der Bildschirmfläche ist allerdings, insbesondere bei Einblendungen eines Textes in ein Bild, nicht immer erforderlich. So kann beispielsweise die erste Bildschirmebene 3a' eine Videosequenz auf der gesamten Bildschirmfläche darstellen, während die zweite Bildschirmebene 3b' zwischenzeitlich eine Textnochricht darstellt. Selbstverständlich können auch mehr als zwei Bildschirmebenen vorgesehen werden. Außerdem kann eine erfindungsgemäße Anordnung nach Fig.4a durch eine entsprechende Ansteuerung der unterschiedlichen Bildschirmebenen auch zur Orientierungsänderung nach Fig.3 verwendet werden.

## Patentansprüche

1. Verfahren zur Darstellung von Abbildungen mit angepasster Orientierung auf einem Bildschirm (3) eines Telekommunikationsendgeräts, insbesondere zur wahlweisen Darstellung mit horizontaler oder vertikaler Orientierung bezüglich des Endgeräts, **dadurch gekennzeichnet, dass** verschiedene unterschiedlich orientierte, übereinander angeordnete physikalische Bildschirmebenen (3a oder 3b) so angesteuert werden, dass bezüglich der Bildschirmorientierung jeweils die gleiche Abbildung oder jeweils ein Ausschnitt desselben Bilds dargestellt wird und dass zur Wahl einer Orientierung eine bestimmte Bildschirmebene (3a oder 3b) aktiviert wird.

2. Verfahren nach Anspruch 1 **dadurch gekennzeichnet, dass** die Bildschirmebenen (3a und 3b) mit identischen Ansteuerungssignalen angesteuert werden.

3. Verfahren nach Anspruch 1, **dadurch gekennzeichnet, dass** die Wahl der Orientierung durch eine bestimmte Eingabe des Benutzers in das Endgerät erfolgt.

4. Verfahren nach Anspruch 3, **dadurch gekennzeichnet, dass** die Eingabe des Benutzers durch Tastatureingabe, Spracheingabe und/oder Berühren bestimmter sensitiver Bildschirmflächen erfolgt.

5. Verfahren nach Anspruch 1, **dadurch gekennzeichnet, dass** die Wahl der Orientierung durch Identifikation bestimmter Bilddaten erfolgt.

6. Verfahren nach Anspruch 5, **dadurch gekennzeichnet, dass** die Bilddaten das Format des Bildes betreffen.

7. Verfahren nach Anspruch 1, **dadurch gekennzeichnet, dass** die Wahl der Orientierung durch Sensormessung der Ausrichtung des Endgeräts und Umschalten der Bildschirmebenen (3a und 3b) so erfolgt, dass die Abbildung für den Benutzer im Rahmen der Möglichkeiten der Wahl optimal ist.

8. Verfahren nach Anspruch 7, **dadurch gekennzeichnet, dass** diejenige Orientierung gewählt wird, bei der die Abweichung der Text- und Bilddarstellung von der Waagrechten am geringsten ist.

9. Verfahren nach Anspruch 1, **dadurch gekennzeichnet, dass** ein wiederholtes Umschalten der Bildorientierung bei geringen Ausrichtungsänderungen in einer bestimmten Lage des Endgeräts durch eine Hystereseschaltung verhindert wird.

10. Bildschirmeinheit eines Telekommunikationsendgeräts mit
• einem Bildschirm (3) bestehend aus zwei oder mehr übereinander angeordneten, einzeln aktivierbaren physikalischen Bildschirmebenen (3a und 3b),
• Aktivierungsmitteln zum Aktivieren einzelner Bildschirmebenen (3a und/oder 3b),
• wobei sich die Darstellungen der aktivierten Bildschirmebenen (3a und/oder 3b) optisch überlagern ,
**dadurch gekennzeichnet, dass**
• die Bildschirmebenen (3a und 3b) verschieden orientiert sind,
• die Aktivierungsmittelsmittel so ausgestaltet sind, dass stets eine der n Bildschirmebenen (3a oder 3b) aktiviert wird,
• und alle Bildschirmebenen (3a und 3b) bezüglich ihrer Orientierung bei Aktivierung eine Abbildung desselben Bilds oder jeweils einen Ausschnitt desselben Bilds darstellen.

11. Bildschirmeinheit nach Anspruch 10, **dadurch gekennzeichnet, dass** die Bildschirmebenen in äquidistanten Winkelschritten eines Winkelbereichs orientiert sind.

12. Bildschirmeinheit nach Anspruch 10, **dadurch gekennzeichnet, dass** die Bildschirmebenen (3a und 3b) bis auf die Stromversorgung parallel elektrisch verbunden sind.

13. Bildschirmeinheit nach Anspruch 10, **dadurch gekennzeichnet, dass** Sensormittel zur Lagemessung des Telekommunikationsendgeräts zur Bestimmung der zu aktivierenden Bildschirmebene (3a oder 3b) vorhanden sind.

14. Bildschirmeinheit nach Anspruch 13, **dadurch gekennzeichnet, dass** die Sensormittel jeweils einen Beschleunigungsmesser in Längsrichtung und einen Beschleunigungsmesser in Querrichtung des Endgeräts beinhalten.

15. Bildschirmeinheit nach Anspruch 10, **dadurch gekennzeichnet, dass**
• die Bildschirmebenen (3a und 3b) elektrisch nicht verbunden sind
• und die Aktivierungsmittelsmittel so ausgestaltet sind, dass eine oder mehrere Bildschirmebenen (3a und/oder 3b) gleichzeitig aktiviert werden können.

16. Telekommunikationsendgerät mit einer Bildschirmeinheit nach Anspruch 10.

## Claims

1. Method for displaying images with adjusted orientation on a screen (3) of a telecommunication terminal, especially for optional display with horizontal or vertical orientation in relation to the terminal, **characterized in that** various differently orientated physical screen layers (3a or 3b) arranged one over another are controlled such that in relation to the screen orientation the same image or a detail of the same picture is displayed in each case, and that a particular screen layer (3a or 3b) is activated for the selection of an orientation.

2. Method according to Claim 1, **characterized in that** the screen layers (3a and 3b) are controlled with identical drive signals.

3. Method according to Claim 1, **characterized in that** the choice of orientation is made by a specific input by the user into the terminal.

4. Method according to Claim 3, **characterized in that** the user's input is by keypad input or voice input and/or by touching sensitive screen areas.

5. Method according to Claim 1, **characterized in that** the choice of orientation is made by identification of certain image data.

6. Method according to Claim 5, **characterized in that** the image data relates to the format of the picture.

7. Method according to Claim 1, **characterized in that** the choice of orientation is made by sensor measurement of the terminal's alignment and switching of the screen layers (3a and 3b) in such a way that the image is optimal for the user within the possibilities for selection.

8. Method according to Claim 7, **characterized in that** the orientation chosen is the one with which the variance of the text and image display from the horizontal is the least.

9. Method according to Claim 1, **characterized in that** a repeated switching of the screen orientation for minor changes of alignment in a particular position of the terminal is prevented with a hysteresis circuit.

10. Screen unit of a telecommunication terminal with
• a screen (3) consisting of two or more physical screen layers (3a and 3b) arranged one over another and individually activated,
• activation means for activating individual screen layers (3a and/or 3b),
• the displays of the activated screen layers (3a and/or 3b) being optically superimposed,
**characterized in that**
• the screen layers (3a and 3b) are differently orientated,
• the activation means are developed such that always one of the n screen layers (3a or 3b) is activated,
• and all screen layers (3a and 3b) in relation to their orientation on activation display a mapping of the same image or in each case a detail of the same image.

11. Screen unit according to Claim 10, **characterized in that** the screen layers are orientated in equidistant angle steps of an angle range.

12. Screen unit according to Claim 10, **characterized in that** the screen layers (3a and 3b) are electrically connected in parallel up to the power supply.

13. Screen unit according to Claim 10, **characterized in that** sensor means for measuring the position of the telecommunication terminal are present to determine the screen layer (3a or 3b) to be activated.

14. Screen unit according to Claim 13, **characterized in that** the sensor means each contain an accelerometer in the longitudinal direction and an accelerometer in the lateral direction of the terminal.

15. Screen unit according to Claim 10, **characterized in that**
• the screen layers (3a and 3b) are not electrically connected
• and the activation means are developed such that one or more screen layers (3a and/or 3b) can be activated simultaneously.

16. Telecommunication terminal with a screen unit according to Claim 10.

## Revendications

1. Procédé pour représenter des images avec une orientation adaptée sur un écran (3) d'un terminal de télécommunication, en particulier pour la représentation au choix avec une orientation horizontale ou verticale par rapport au terminal, **caractérisé en ce que** différents plans d'écran (3a ou 3b) physiques orientés différemment et disposés les uns au-dessus des autres sont activés de telle sorte que, par rapport à l'orientation d'écran, on représente à chaque fois la même image ou à chaque fois un extrait de la même image et **en ce qu'**on active un plan d'écran (3a ou 3b) défini pour le choix d'une orientation.

2. Procédé selon la revendication 1, **caractérisé en ce que** les plans d'image (3a et 3b) sont activés avec des signaux d'activation identiques.

3. Procédé selon la revendication 1, **caractérisé en ce que** le choix de l'orientation s'effectue par une entrée définie de l'utilisateur dans le terminal.

4. Procédé selon la revendication 3, **caractérisé en ce que** l'entrée de l'utilisateur s'effectue par entrée au clavier, entrée vocale, et/ou contact avec certaines surfaces d'écran sensibles.

5. Procédé selon la revendication 1, **caractérisé en ce que** le choix de l'orientation s'effectue par l'identification de certaines données d'image.

6. Procédé selon la revendication 5, **caractérisé en ce que** les données d'image concernent le format de l'image.

7. Procédé selon la revendication 1, **caractérisé en ce que** le choix de l'orientation s'effectue par une mesure de capteur de l'orientation du terminal et commutation des plans d'image (3a et 3b) de telle sorte que l'image pour l'utilisateur est optimale dans le cadre des possibilités du choix.

8. Procédé selon la revendication 7, **caractérisé en ce qu'**on choisit l'orientation pour laquelle l'écart entre la représentation du texte et la représentation de l'image par rapport à l'horizontale est le plus faible.

9. Procédé selon la revendication 1, **caractérisé en ce qu'**une commutation répétée de l'orientation d'image dans le cas de faibles variations d'orientation est empêchée dans une position définie du terminal par un circuit d'hystérésis.

10. Unité d'écran d'un terminal de télécommunication, comprenant
• un écran (3) comprenant deux ou plus plans d'image (3a et 3b) physiques disposés les uns au-dessus des autres et activables individuellement,
• des moyens d'activation pour l'activation de certains plans d'écran (3a et/ou 3b),
• des représentations des plans d'écran (3a et/ou 3b) activés se superposant au plan visuel,
**caractérisée en ce que**
• les plans d'écran (3a et 3b) sont orientés différemment,
• les moyens d'activation sont conçus de telle sorte que toujours l'un des n plans d'image (3a ou 3b) est activé,
• et tous les plans d'image (3a et 3b) représentent par rapport à leur orientation, en cas d'activation, une illustration de la même image ou à chaque fois un extrait de la même image.

11. Unité d'écran selon la revendication 10, **caractérisée en ce que** les plans d'écran sont orientés dans des incréments angulaires équidistants dans une plage angulaire.

12. Unité d'écran selon la revendication 10, **caractérisée en ce que** les plans d'écran (3a et 3b) sont reliés électriquement en parallèle à l'exception de l'alimentation électrique.

13. Unité d'écran selon la revendication 10, **caractérisée en ce que** des moyens de capteur pour la mesure de position du terminal de télécommunication sont présents pour la détermination du plan d'écran (3a ou 3b) à activer.

14. Unité d'écran selon la revendication 13, **caractérisée en ce que** les moyens de capteur contiennent chacun un mesureur d'accélération dans le sens horizontal et un mesureur d'accélération dans le sens transversal du terminal.

15. Unité d'écran selon la revendication 10, **caractérisée en ce que**
• les plans d'écran (3a et 3b) ne sont pas reliés électriquement et
• et les moyens d'activation sont conçus de telle sorte que un ou plusieurs plans d'écran (3a et/ou 3b) peuvent être activés simultanément.

16. Terminal de télécommunication comprenant une unité d'écran selon la revendication 10.
